# EUROPÄISCHE PATENTSCHRIFT

(11) **EP 2 167 832 B1**
(45) Veröffentlichungstag und Bekanntmachung des Hinweises auf die Patenterteilung: **23.02.2011**
(21) Anmeldenummer: 08761194.3
(22) Anmeldetag: 19.06.2008
(51) Int. Cl.: F16D 48/06

(54) **VERFAHREN ZUR STEUERUNG EINER AUTOMATISIERTEN TRENNKUPPLUNG**
METHOD FOR CONTROLLING AN AUTOMATIC CLUTCH
PROCÉDÉ DE COMMANDE D'UN EMBRAYAGE AUTOMATIQUE

(30) Priorität: 14.07.2007 DE 102007032946
(43) Veröffentlichungstag der Anmeldung: 31.03.2010
(73) Patentinhaber: ZF Friedrichshafen AG, 88038 Friedrichshafen (DE)
(72) Erfinder: HENSINGER, Klaus, 88046 Friedrichshafen (DE); VESENJAK, Andelko, 88074 Meckenbeuren (DE)
(86) Internationale Anmeldenummer: PCT/EP2008/057748
(87) Internationale Veröffentlichungsnummer: WO 2009/010363

(56) Entgegenhaltungen:
- EP-A- 1 359 336
- WO-A-2005/078304
- DE-A1- 2 933 075
- DE-A1-102005 026 615
- US-A- 4 576 263
- US-A1- 2003 043 032
- US-A1- 2004 061 603

## Beschreibung

Die Erfindung betrifft ein Verfahren zur Steuerung einer automatisierten Trennkupplung, die als Reibungskupplung ausgebildet und im Antriebsstrang eines Kraftfahrzeugs zwischen der Turbinenwelle eines hydrodynamischen Drehmomentwandlers und der Eingangswelle eines mit formschlüssigen Schaltelementen versehenen Stufenschaltgetriebes angeordnet ist, und die bei Unterschreiten einer Mindestgeschwindigkeit sowie nicht betätigtem Fahrpedal und betätigtem Bremspedal ausgerückt, und mit eingelegtem Anfahrgang bei Überschreiten der Mindestgeschwindigkeit oder betätigtem Fahrpedal oder nicht betätigtem Bremspedal eingerückt wird.

Besonders bei schweren Nutzfahrzeugen und Sonderfahrzeugen, wie z.B. Löschfahrzeugen und Kranfahrzeugen, kommen über formschlüssige Schaltelemente, wie synchronisierte oder unsynchronisierte Klauenkupplungen, manuell oder automatisiert schaltbare Stufenschaltgetriebe zum Einsatz, die jeweils eingangsseitig über einen hydrodynamischen Drehmomentwandler mit dem Antriebsmotor in Verbindung stehen. Da ein Drehmomentwandler bei laufendem Antriebsmotor, Fahrzeugstillstand und eingelegtem Gang aufgrund der in diesem Fall hohen Momentenüberhöhung von etwa 2,0 bis 2,5 ein relativ hohes Antriebsmoment überträgt, das entsprechend der Übersetzung des eingelegten Gangs und des Achsantriebs gewandelt als Kriechmoment an den Rädern der Antriebsachse wirksam ist, kann ein unerwünschtes Anrollen des Kraftfahrzeugs zumeist nur durch eine entsprechend starke Betätigung der Betriebsbremse verhindert werden. Ohne weitere Vorkehrungen führt dies zu einem erhöhten Verschleiß der Radbremsen und aufgrund der Leerlaufregelung des Antriebsmotors zu einem relativ hohen Kraftstoffverbrauch sowie unnötig hohen Schadstoffemissionen. Insbesondere bei rutschigem Untergrund, wie bei Eis- und Schneeglätte, kann es beim Abbremsen eines aufgrund des Kriechmomentes rollenden Kraftfahrzeugs auch zu einem unerwünschten

Überbremsen und Blockieren der nicht angetriebenen Räder kommen.

Daher ist in einem derartigen Antriebsstrang in an sich bekannter Weise zwischen der Turbinenwelle des Drehmomentwandlers und der Eingangswelle des Stufenschaltgetriebes häufig eine als steuerbare, d.h. automatisiert ein- und ausrückbare Reibungskupplung, wie Ein- oder Mehrscheibentrockenkupplung oder Lamellenkupplung, ausgebildete Trennkupplung angeordnet, die bei Fahrzeugstillstand und vor einer Schaltung des Stufenschaltgetriebes ausgerückt sowie zum Anfahren und nach einer Schaltung des Stufenschaltgetriebes eingerückt wird. Der Drehmomentwandler und die Trennkupplung sind zumeist in einer als Wandlerschaltkupplung bezeichneten baulichen Einheit zusammengefasst. Ein derartiger Antriebsstrang und eine zugeordnete Steuereinrichtung sind beispielsweise in der DE 36 26 100 C2 beschrieben. Eine entsprechende Kombination eines automatisierten Schaltgetriebes mit einer Wandlerschaltkupplung, die für den Einsatz in schweren Nutzfahrzeugen und Sonderfahrzeugen vorgesehen ist, ist unter der Bezeichnung "TC-Tronic" aus dem Produktionsprogramm der Anmelderin bekannt.

Bei einem Kraftfahrzeug, das mit einem über einen hydrodynamischen Drehmomentwandler mit dem Antriebsmotor in Verbindung stehenden und mit reibschlüssigen Schaltelementen, wie Schaltkupplungen und Schaltbremsen, versehenen Automatgetriebe ausgerüstet ist, kann eine Aufhebung oder Reduzierung des Kriechmomentes bekanntlich dadurch erfolgen, dass ein aufgrund des eingelegten Gangs lastführendes, also geschlossenes getriebeinternes Schaltelement ganz oder teilweise geöffnet wird. Eine derartige Standabkoppelung des Antriebsmotors erfolgt, wie es z.B. aus der DE 29 33 075 A1, der US 4,513,639 A, der DE 42 23 084 A1 und der EP 0 681 123 A2 für ein Automatgetriebe in Planetenbauweise sowie aus der EP 1 158 221 A2 für ein Automatgetriebe in Vorgelegebauweise bekannt ist, wenn die Fahrgeschwindigkeit eine als Stillstandsschwelle angesehene Mindestgeschwindigkeit unterschreitet, das Fahrpedal nicht betätigt wird, der Antriebsmotor sich also im Leerlauf befindet, und das Bremspedal betätigt wird, d.h. das Kraftfahrzeug mit der Betriebsbremse gebremst wird. Wenn eine dieser drei Bedingungen nicht erfüllt ist, z.B. weil der Fahrer zum Anfahren das Bremspedal loslässt und das Fahrpedal betätigt, so wird das betreffende Schaltelement wieder geschlossen und somit das zuvor abgeschaltete oder verringerte Kriechmoment wieder eingeschaltet bzw. erhöht.

In ähnlicher Weise erfolgt auch bei dem vorliegend betrachteten Antriebsstrang die Standabkoppelung des Antriebsmotors durch das Öffnen der getriebeexternen Trennkupplung. Dabei kommt es bislang zu einem unangenehmen Laststoß, weil die Trennkupplung mit einer gewissen zeitlichen Verzögerung erst nach Unterschreiten der Mindestgeschwindigkeit bei nahezu maximalem Kriechmoment ausgerückt wird. Ebenso kann das Kraftfahrzeug ungewollt an einer Steigung zurückrollen, weil die Trennkupplung nach dem Loslassen des Bremspedals und der Betätigung des Fahrpedals unter Umständen zu spät geschlossen wird. Aufgrund eines beim Anfahren zu Beginn hohen Kriechmomentes und eines ansteigenden Motormomentes kommt es beim Schließen der Trennkupplung auch zu einer hohen mechanischen und thermischen Belastung der Trennkupplung. Bei häufigem Anfahren, insbesondere bei großer Fahrbahnsteigung und mit hoher Zuladung, kann die Trennkupplung daher auch überlastet werden.

Der Erfindung liegt daher die Aufgabe zugrunde, ein Verfahren zur Steuerung einer automatisierten Reibungskupplung der eingangs genannten Art anzugeben, mit dem die vorgenannten Nachteile vermieden werden können, also der Fahrkomfort verbessert, die Fahrsicherheit erhöht und eine Überlastung der Reibungskupplung vermieden werden kann.

Die Lösung der Aufgabe ergibt sich jeweils aus den Merkmalen der unabhängigen Ansprüche 1 und 2.

Gemäß Anspruch 1 betrifft die Erfindung demnach ein Verfahren zur Steuerung einer automatisierten Trennkupplung, die als Reibungskupplung ausgebildet und im Antriebsstrang eines Kraftfahrzeugs zwischen der Turbinenwelle eines hydrodynamischen Drehmomentwandlers und der Eingangswelle eines mit formschlüssigen Schaltelementen versehenen Stufenschaltgetriebes angeordnet ist, und die bei Unterschreiten einer Mindestgeschwindigkeit und nicht betätigtem Fahrpedal und betätigtem Bremspedal ausgerückt sowie mit eingelegtem Anfahrgang bei Überschreiten der Mindestgeschwindigkeit oder betätigtem Fahrpedal oder nicht betätigtem Bremspedal eingerückt wird. Weiter ist vorgesehen, dass mindestens ein vor einem Anhalten oder zu Beginn eines Anhaltens einem Anstieg unterliegender Betriebsparameter wiederholt erfasst und mit einem vorab festgelegten oberen Grenzwert verglichen wird, dessen Überschreitung als ein bevorstehendes Anhalten des Kraftfahrzeugs interpretierbar ist, und dass die Trennkupplung bei nicht betätigtem Fahrpedal und betätigtem Bremspedal dann schon vor der Unterschreitung der Mindestgeschwindigkeit ausgerückt wird, wenn der Betriebsparameter den oberen Grenzwert überschreitet.

Zusätzlich oder alternativ zu der vorgenannten Lösung besteht die Lösung der Aufgabe gemäß den Merkmalen des Anspruchs 2 in einem Verfahren zur Steuerung einer automatisierten Trennkupplung, die als Reibungskupplung ausgebildet und im Antriebsstrang eines Kraftfahrzeugs zwischen der Turbinenwelle eines hydrodynamischen Drehmomentwandlers und der Eingangswelle eines mit formschlüssigen Schaltelementen versehenen Stufenschaltgetriebes angeordnet ist, und die bei Unterschreiten einer Mindestgeschwindigkeit und nicht betätigtem Fahrpedal und betätigtem Bremspedal ausgerückt sowie mit eingelegtem Anfahrgang bei Überschreiten der Mindestgeschwindigkeit oder betätigtem Fahrpedal oder nicht betätigtem Bremspedal eingerückt wird. Zudem ist vorgesehen, dass mindestens ein vor dem Anfahren oder zu Beginn eines Anfahrens einer Verringerung unterliegender Betriebsparameter wiederholt erfasst und mit einem vorab festgelegten unteren Grenzwert verglichen wird, dessen Unterschreitung als ein bevorstehendes Anfahren des Kraftfahrzeugs interpretierbar ist, und dass die Trennkupplung dann schon vor der Überschreitung der Mindestgeschwindigkeit oder dem Loslassen des Bremspedals oder der Betätigung des Fahrpedals eingerückt wird, wenn der Betriebsparameter den unteren Grenzwert unterschreitet.

Vorteilhafte und zweckmäßige Ausgestaltungen und Weiterbildungen dieser beiden erfindungsgemäßen Verfahrensvarianten sind Gegenstand der Ansprüche 3 bis 7.

Die beiden Verfahrensvarianten gemäß Anspruch 1 und Anspruch 2 gehen demnach jeweils von einer automatisierten Trennkupplung aus, die als Reibungskupplung ausgebildet und im Antriebsstrang eines Kraftfahrzeugs zwischen der Turbinenwelle eines hydrodynamischen Drehmomentwandlers und der Eingangswelle eines mit formschlüssigen Schaltelementen, wie synchronisierten oder unsynchronisierten Klauenkupplungen, versehenen Stufenschaltgetriebes angeordnet ist. Diese Trennkupplung wird nach dem Stand der Technik bei Unterschreiten einer Mindestgeschwindigkeit (v_{F} < vₘᵢₙ) und nicht betätigtem Fahrpedal (x_{FP} = 0) und betätigtem Bremspedal (x_{BP} > 0, p_{Br} > 0) ausgerückt sowie mit eingelegtem Anfahrgang bei Überschreiten der Mindestgeschwindigkeit (v_{F} ≥ vₘᵢₙ) oder betätigtem Fahrpedal (x_{FP} > 0) oder nicht betätigtem Bremspedal (x_{BP} = 0, p_{Br} = 0) eingerückt.

Der Nachteil eines Wegbremsens eines bei geringer Fahrgeschwindigkeit mit der Annäherung an den Fahrzeugstillstand stark ansteigenden Kriechmomentes und eines starken Entlastungsstoßes beim Ausrücken der Trennkupplung wird erfindungsgemäß nach Anspruch 1 dadurch vermieden, dass die Trennkupplung bei nicht betätigtem Fahrpedal (x_{FP} = 0) und betätigtem Bremspedal (x_{Bp} > 0, p_{Br} > 0) schon vor der Unterschreitung der genannten Mindestgeschwindigkeit vₘᵢₙ ausgerückt wird, wenn der erfasste Betriebsparameter den oberen Grenzwert überschreitet, welches als ein bevorstehendes Anhalten des Kraftfahrzeugs interpretierbar ist, d.h. die Absicht des Fahrers, das Kraftfahrzeug anzuhalten aufgrund des hohen Wertes des maßgeblichen Betriebsparameters schon vor der Unterschreitung der Mindestgeschwindigkeit vₘᵢₙ objektiv erkennbar ist. Da die Trennkupplung dann mit dem Eintritt des Fahrzeugsstillstands zumindest schon teilweise ausgerückt ist, wird von dem Drehmomentwandler aufgrund der geringeren Drehzahldifferenz zwischen Pumpenrad und Turbinenrad ein deutlich kleineres Drehmoment übertragen, das an den Rädern der Antriebsachse als Kriechmoment wirksam ist.

Die Nachteile eines möglichen Zurückrollens des Kraftfahrzeugs und einer hohen Belastung der Trennkupplung aufgrund eines Anfahrens mit anfänglich hohem Kriechmoment und ansteigendem Motormoment beim Einrücken der Trennkupplung werden erfindungsgemäß nach Anspruch 2 dadurch vermieden, dass die Trennkupplung nach dem Einlegen eines Anfahrgangs schon vor der Überschreitung der Mindestgeschwindigkeit vₘᵢₙ oder dem vollständigen Loslassen des Bremspedals (x_{BP} = 0, p_{Br} = 0) oder der Betätigung des Fahrpedals (x_{FP} > 0) eingerückt wird, wenn der erfasste Betriebsparameter den genannten unteren Grenzwert unterschreitet, was als ein bevorstehendes Anfahren des Kraftfahrzeugs interpretierbar ist, also die Absicht des Fahrers anzufahren aufgrund des niedrigen Wertes des maßgeblichen Betriebsparameters z.B. schon vor dem Loslassen des Bremspedals und vor der Betätigung des Fahrpedals objektiv erkennbar ist.

Als maßgeblicher Betriebsparameter wird bevorzugt der Betätigungsgrad der Betriebsbremse wiederholt sensorisch erfasst und zur Steuerung der Trennkupplung verwendet. Dies führt z.B. beim Loslassen des Bremspedals schon vor dem Erreichen dessen Ruhestellung und dem vollständigen Lösen der Betriebsbremse zu einem vorzeitigen Ausrücken der Trennkupplung vor Erreichen des Fahrzeugstillstands, so dass ein bei hohem Kriechmoment entstehender Entlastungsstoß vermieden wird. Zudem hat das Verfahren den Vorteil, dass der Antriebsstrang bei einer Notbremsung automatisch frühzeitig geöffnet und damit der Bremsweg des Kraftfahrzeugs verkürzt wird.

Als Betätigungsgrad der Betriebsbremse und somit als maßgeblicher Betriebsparameter kann der Stellweg x_{BP} des Bremspedals, z.B. mittels eines Pedalwegsensors, wiederholt sensorisch erfasst und zur Steuerung der Trennkupplung verwendet werden.

Die Steuerung der Trennkupplung erfolgt in diesem Fall zweckmäßig derart, dass die Trennkupplung bei einem über einem vorab festgelegten oberen Auslenkungsgrenzwert X_{Gr/o} liegenden Stellweg X_{BP} des Bremspedals (X_{BP} > X_{Gr/o}) ausgerückt und bei einem unter einem vorab festgelegten unteren Auslenkungsgrenzwert X_{Gr/u} liegenden Stellweg x_{BP} des Bremspedals (X_{BP} < x_{Gr/u}) eingerückt wird.

Als Betätigungsgrad der Betriebsbremse und somit als maßgeblicher Betriebsparameter kann jedoch auch der mittels des Bremspedals eingestellte Bremsdruck p_{Br}, z.B. mittels eines im Bremssystem angeordneten Bremsdrucksensors, wiederholt sensorisch erfasst und zur Steuerung der Trennkupplung verwendet werden.

Die Steuerung der Trennkupplung erfolgt in diesem Fall bevorzugt derart, dass die Trennkupplung bei einem über einem vorab festgelegten oberen Bremsdruckgrenzwert p_{Gr/o} liegenden Bremsdruck p_{Br} ausgerückt (p_{Br} > P_{Gr/o}) und bei einem unter einem vorab festgelegten unteren Bremsdruckgrenzwert p_{Gr/u} liegenden Bremsdruck p_{Br} eingerückt (p_{Br} < P_{Gr/u}) wird.

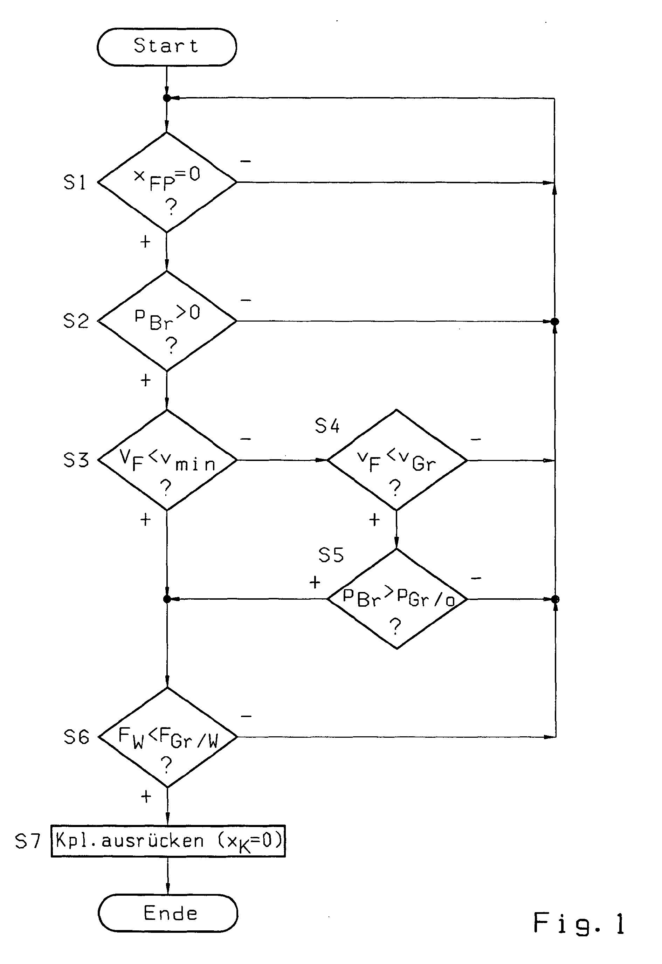

Zur Verdeutlichung der Erfindung ist der Beschreibung eine Zeichnung beigefügt. In dieser zeigt
- Fig. 1: einen Ablaufplan einer bevorzugten Ausführung des erfindungs- gemäßen Verfahrens, und
- Fig. 2: einen schematischen Aufbau eines Antriebsstrangs zur beispiel- haften Anwendung des erfindungsgemäßen Verfahrens.

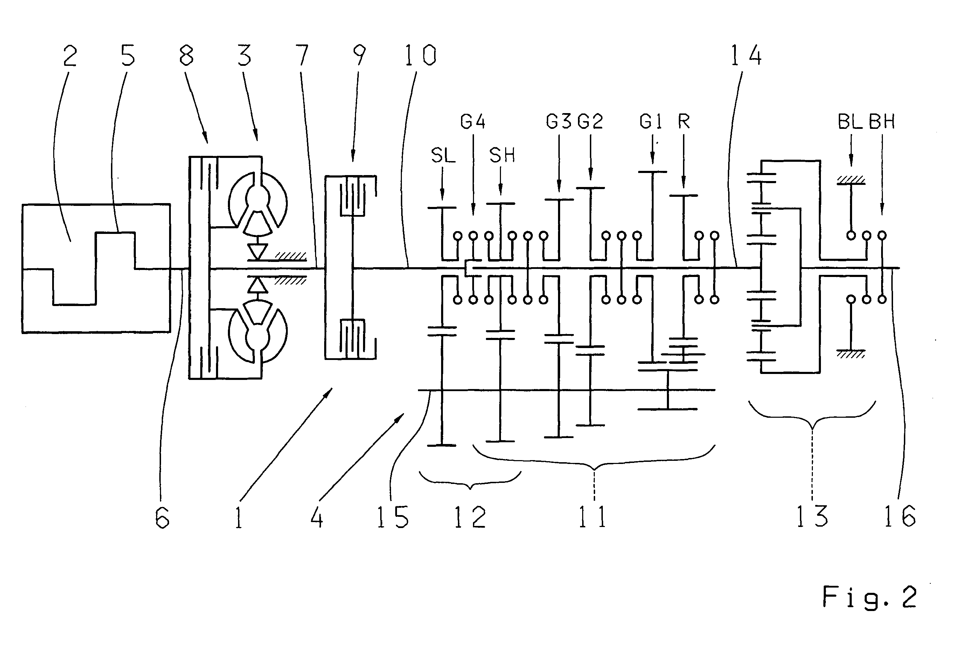

Ein Antriebsstrang 1 nach Fig. 2, bei dem das erfindungsgemäße Verfahren anwendbar ist, weist einen als Verbrennungsmotor ausgebildeten Antriebsmotor 2 auf, der über einen hydrodynamischen Drehmomentwandler 3 mit einem zumindest teilweise automatisiert schaltbaren Stufenschaltgetriebe 4 in Verbindung steht. Die Triebwelle 5 (Kurbelwelle) des Antriebsmotors 2 ist drehfest mit der Pumpenwelle 6 des Drehmomentwandlers 3 verbunden. Die Turbinenwelle 7 des Drehmomentwandlers 3 ist bedarfsweise über eine Überbrückungskupplung 8 mit der Pumpenwelle 6 verbindbar. Im Kraftfluss zwischen dem Drehmomentwandler 3 und dem Stufenschaltgetriebe 4 ist eine vorliegend als automatisierte Lamellenkupplung ausgebildete Trennkupplung 9 angeordnet, deren eingangsseitiger Lamellenträger drehfest mit der Turbinenwelle 7 des Drehmomentwandlers 3 und deren ausgangsseitiger Lamellenträger drehfest mit der Eingangswelle 10 des Stufenschaltgetriebes 4 verbunden ist.

Das Stufenschaltgetriebe 4 ist als ein Gruppengetriebe aufgebaut und besteht aus einem Hauptgetriebe 11 mit vier Vorwärtsgängen G1, G2, G3, G4 und einem Rückwärtsgang R, einer dem Hauptgetriebe 11 vorgeschalteten Splitgruppe 12 mit den Übersetzungsstufen SL und SH, sowie einer dem Hauptgetriebe 11 antriebstechnisch nachgeordneten Bereichsgruppe 13 mit den beiden Übersetzungsstufen BL und BH. Das Hauptgetriebe 11 ist als ein Vorgelegegetriebe ausgebildet und weist eine Hauptwelle 14 sowie eine Vorgelegewelle 15 auf.

Die Gänge G1, G2, G3, und R werden durch Zahnradsätze mit jeweils einem auf der Hauptwelle 14 drehbar gelagerten Losrad und einem auf der Vorgelegewelle 15 drehfest angeordneten Festrad gebildet. Der Zahnradsatz des Rückwärtsgangs R weist zur Drehrichtungsumkehr ein nicht weiter bezeichnetes Zwischenrad auf und nutzt dasselbe Festrad wie der Zahnradsatz des ersten Gangs G1. Die Schaltung des Hauptgetriebes 11, also das Ein- und Auslegen der Gänge G1, G2, G3, R erfolgt jeweils selektiv durch das Ein- und Ausrücken einer zugeordneten formschlüssigen Schaltkupplung, wodurch das betreffende Losrad drehfest mit der Hauptwelle 14 gekoppelt bzw. die drehfeste Verbindung wieder gelöst wird. Der vierte Gang G4 ist als Direktgang ausgebildet und wird durch das gleichzeitige Einrücken von zwei Schaltkupplungen durch eine drehfeste Verbindung der Eingangswelle 10 über das Losrad des dritten Gangs G3 mit der Hauptwelle 14 geschaltet.

Die beiden Übersetzungsstufen SL, SH der Splitgruppe 12 sind jeweils durch ein Zahnradpaar gebildet, deren Losräder drehbar auf der Eingangswelle 10 bzw. der Hauptwelle 14 gelagert sind, und deren Festräder drehfest auf einer Verlängerung der Vorgelegewelle 15 angeordnet sind. Die beiden Losräder sind über zugeordnete Schaltkupplungen wechselweise mit der Eingangswelle 10 koppelbar. Die beiden Übersetzungsstufen SL, SH der Splitgruppe 12, die geringfügig abweichende Übersetzungen i_{SG} aufweisen, bilden somit zwei schaltbare Eingangskonstanten des Hauptgetriebes 11.

Die Bereichsgruppe 13 ist als ein einfacher Planetenradsatz aufgebaut, dessen Sonnenrad drehfest mit der Hauptwelle 14 des Hauptgetriebes 11 verbunden ist, dessen Planetenträger drehfest mit der Ausgangswelle 16 gekoppelt ist, und dessen Hohlrad über jeweils eine Schaltkupplung wahlweise mit dem Getriebegehäuse oder der Ausgangswelle 16 verbindbar ist. Bei einer Kopplung des Hohlrades mit dem Getriebegehäuse ergibt sich die Übersetzungsstufe BL mit einer Übersetzung von 2,5 ≤ i_{BG ≤} 5,0 für den Langsamfahrbereich, wogegen sich bei einer Kopplung des Hohlrades mit der Ausgangswelle 16 aufgrund des starr umlaufenden Planetenradsatzes die Übersetzungsstufe BH mit der Übersetzung i_{BG} = 1 für den Schnellfahrbereich ergibt.

Durch die Kombination aller Schaltungsmöglichkeiten des Hauptgetriebes 11, der Splitgruppe 12 und der Bereichsgruppe 13 weist das Stufenschaltgetriebe 4 somit insgesamt sechzehn Vorwärtsgänge auf.

In einer bevorzugten Ausführung des erfindungemäßen Verfahrens nach dem Ablaufschema von Fig. 2 wird innerhalb des Steuerungsprogramms des Stufenschaltgetriebes 4 und der Trennkupplung 9 zunächst in Schritt S1 geprüft, ob sich das Fahrpedal aktuell in seiner Ruhestellung (x_{FP} = 0) befindet, also nicht betätigt ist. Danach wird in Schritt S2 geprüft, ob der über eine Betätigung des Bremspedals erzeugte aktuelle Bremsdruck p_{Br} größer als Null ist (p_{Br} > 0), d.h. das Bremspedal betätigt ist. Schließlich wird in Schritt S3 geprüft, ob die aktuelle Fahrgeschwindigkeit v_{F} unterhalb einer vorab festgelegten und als Stillstandsschwelle angesehenen Mindestgeschwindigkeit vₘᵢₙ liegt (v_{F} < Vₘᵢₙ).

Ist eine der drei Bedingungen nicht erfüllt, so wird bislang, also nach dem Stand der Technik, wie vorliegend bei den nicht erfüllten Prüfbedingungen von Schritt S1 und S2, vor Schritt S1 zurück verzweigt. Sind dagegen alle drei Bedingungen der Schritte S1 bis S3 erfüllt, also eine Anhaltesituation erkannt, so wird bislang die Trennkupplung 9 ausgerückt, um die dauerhafte Übertragung eines hohen Kriechmomentes zu vermeiden.

Im Unterschied dazu wird erfindungsgemäß in dem Fall, dass die Bedingung von Schritt S3 nicht erfüllt ist, zunächst in Schritt S4 geprüft, ob die Fahrgeschwindigkeit v_{F} unter einer höheren, also oberhalb der Mindestgeschwindigkeit vₘᵢₙ liegenden Grenzgeschwindigkeit v_{Gr} liegt (v_{min ≤} v_{F} < v_{Gr}), die so gewählt ist, dass eine Anhaltesituation möglich ist. Falls die Fahrgeschwindigkeit v_{F} größer oder gleich der Grenzgeschwindigkeit v_{Gr} ist, also die Bedingung von Schritt S4 nicht erfüllt ist, so wird vor Schritt S1 zurück verzweigt. Andernfalls wird in Schritt S5 geprüft, ob der durch die Betätigung des Bremspedals erzeugte Bremsdruck p_{Br} größer als ein vorab festgelegter oberer Bremsdruckgrenzwert p_{Gr/o} ist (p_{Br} > p_{Gr/o}). Wenn diese Bedingung nicht erfüllt ist, wird vor Schritt S1 zurück verzweigt. Bei erfüllter Bedingung wird jedoch in dem nachfolgenden Schritt S7 die Trennkupplung 9 ausgerückt, ohne dass die Fahrgeschwindigkeit v_{F} die Mindestgeschwindigkeit vₘᵢₙ unterschritten hat (v_{F} ≥ vₘᵢₙ).

Demnach wird der Bremsdruck p_{Br} erfindungsgemäß als ein bei einem Anhaltevorgang maßgeblicher Betriebsparameter angesehen, wobei das Überschreiten des entsprechend gewählten oberen Bremsdruckgrenzwertes p_{Gr/o} als bevorstehendes Anhalten des Kraftfahrzeugs interpretiert und demzufolge die Trennkupplung 9 frühzeitig ausgerückt wird. Durch das frühzeitige Ausrücken der Trennkupplung 9 wird ein starkes Wegbremsen des mit abnehmender Fahrgeschwindigkeit v_{F} zunehmenden Kriechmomentes und ein großer Entlastungsstoß bei einem späteren Ausrücken der Trennkupplung 9 unter hohem Kriechmoment vermieden, da die Trennkupplung 9 mit Eintritt des Fahrzeugstillstands zumindest schon teilweise ausgerückt ist und somit ein deutlich reduziertes Kriechmoment vorliegt.

Vor dem Ausrücken der Trennkupplung 9 in Schritt S7 wird erfindungsgemäß zusätzlich geprüft, ob danach bei einem nachfolgenden Anfahrvorgang durch den Schlupfbetrieb eine thermische und/oder mechanische Überlastung der Trennkupplung 9 zu erwarten ist. Diese Prüfung erfolgt in Schritt S6 vorliegend dadurch, dass der im wesentlichen durch die aktuelle Fahrzeugmasse m_{Fzg} und die vorliegende Fahrbahnsteigung α_{FB} bestimmte Fahrwiderstand F_{w} ermittelt wird und das Ausrücken der Trennkupplung 9 nur dann zugelassen wird, wenn der ermittelte Fahrwiderstand F_{W} kleiner als ein vorab festgelegter Widerstandsgrenzwert F_{GR/W} ist. Der Widerstandsgrenzwert F_{GR/W} ist so gewählt, dass eine Anfahrt mit schlupfender Trennkupplung 9 bei gleich großem oder größerem aktuellen Fahrwiderstand F_{W} eine nachhaltige Schädigung der Trennkupplung 9 erwarten lässt. Daher wird in diesem Fall zurück vor Schritt S1 verzweigt, also die Trennkupplung 9 nicht ausgerückt und nachfolgend gegebenenfalls mit geschlossener Trennkupplung 9 angehalten.

### Bezugszeichen

- 1: Antriebsstrang
- 2: Antriebsmotor
- 3: Drehmomentwandler
- 4: Stufenschaltgetriebe
- 5: Triebwelle, Kurbelwelle
- 6: Pumpenwelle
- 7: Turbinenwelle
- 8: Überbrückungskupplung
- 9: Trennkupplung
- 10: Eingangswelle
- 11: Hauptgetriebe
- 12: Splitgruppe
- 13: Bereichsgruppe
- 14: Hauptwelle
- 15: Vorgelegewelle
- 16: Ausgangswelle
- BH: Übersetzungsstufe (von 13)
- BL: Übersetzungsstufe (von 13)
- F_{Gr/W}: Widerstandsgrenzwert
- F_{W}: Fahrwiderstand
- G1: erster (Vorwärts-)Gang (von 11)
- G2: zweiter (Vorwärts-)Gang (von 11)
- G3: dritter (Vorwärts-)Gang (von 11)
- G4: vierter (Vorwärts-)Gang (von 11)
- i_{BG}: Übersetzung (von 13)
- i_{SG}: Übersetzung (von 12)
- m_{Gr/L}: Beladungsgrenzwert
- m_{Gr/F}: Massengrenzwert
- m_{L}: Zuladung
- M_{Fzg}: Fahrzeugmasse
- p_{Br}: Bremsdruck
- P_{Gr/o}: oberer Bremsdruckgrenzwert
- P_{Gr/u}: unterer Bremsdruckgrenzwert
- Q_{Gr}: Wärmegrenzwert
- Q_{K}: abgeführte Wärmemenge (von 9)
- Q_{N}: Nettowärmemenge (von 9)
- Q_{R}: zugeführte Wärmemenge (von 9)
- R: Rückwärtsgang (von 11)
- SH: Übersetzungsstufe (von 12)
- SL: Übersetzungsstufe (von 12)
- S1-S7: Verfahrensschritt
- T_{Gr}: Temperaturgrenzwert
- T_{K}: Betriebstemperatur (von 9)
- v_{F}: Fahrgeschwindigkeit
- V_{Gr}: Grenzgeschwindigkeit
- Vₘᵢₙ: Mindestgeschwindigkeit
- x_{BP}: Stellweg, Auslenkung (eines Bremspedals)
- x_{FP}: Stellweg, Auslenkung (eines Fahrpedals)
- x_{Gr/o}: oberer Auslenkungsgrenzwert (eines Bremspedals)
- x_{Gr/u}: unterer Auslenkungsgrenzwert (eines Bremspedals)
- x_{K}: Einrückungsgrad (von 9)
- α_{FB}: Fahrbahnsteigung
- α_{Gr}: Steigungsgrenzwert

## Patentansprüche

1. Verfahren zur Steuerung einer automatisierten Trennkupplung (9), die als Reibungskupplung ausgebildet und im Antriebsstrang eines Kraftfahrzeugs zwischen der Turbinenwelle (7) eines hydrodynamischen Drehmomentwandlers (3) und der Eingangswelle (10) eines mit formschlüssigen Schaltelementen versehenen Stufenschaltgetriebes (4) angeordnet ist, und die bei Unterschreiten einer Mindestgeschwindigkeit (v_{F} < vₘᵢₙ) und nicht betätigtem Fahrpedal (x_{FP} = 0) sowie betätigtem Bremspedal (x_{BP} > 0, p_{Br} > 0) ausgerückt, und mit eingelegtem Anfahrgang bei Überschreiten der Mindestgeschwindigkeit (v_{F} ≥ vₘᵢₙ) oder betätigtem Fahrpedal (x_{FP} > 0) oder nicht betätigtem Bremspedal (x_{BP} = 0, p_{Br} = 0) eingerückt wird, **dadurch gekennzeichnet, dass** mindestens ein vor einem Anhalten oder zu Beginn eines Anhaltens einem Anstieg unterliegender Betriebsparameter wiederholt erfasst und mit einem vorab festgelegten oberen Grenzwert verglichen wird, dessen Überschreitung als ein bevorstehendes Anhalten des Kraftfahrzeugs interpretierbar ist, und dass die Trennkupplung (9) bei nicht betätigtem Fahrpedal (x_{FP} = 0) und betätigtem Bremspedal (x_{BP} > 0, p_{Br} > 0) dann schon vor der Unterschreitung der Mindestgeschwindigkeit (vₘᵢₙ) ausgerückt wird, wenn der Betriebsparameter den oberen Grenzwert überschreitet.

2. Verfahren zur Steuerung einer automatisierten Trennkupplung (9), die als Reibungskupplung ausgebildet und im Antriebsstrang eines Kraftfahrzeugs zwischen der Turbinenwelle (7) eines hydrodynamischen Drehmomentwandlers (3) und der Eingangswelle (10) eines mit formschlüssigen Schaltelementen versehenen Stufenschaltgetriebes (4) angeordnet ist, und die bei Unterschreiten einer Mindestgeschwindigkeit (v_{F} < vₘᵢₙ) und nicht betätigtem Fahrpedal (x_{FP} = 0) und betätigtem Bremspedal (x_{BP} > 0, p_{Br} > 0) ausgerückt, sowie mit eingelegtem Anfahrgang bei Überschreiten der Mindestgeschwindigkeit (v_{F} ≥ vₘᵢₙ) oder betätigtem Fahrpedal (x_{FP} > 0) oder nicht betätigtem Bremspedal (x_{BP} = 0, p_{Br} = 0) eingerückt wird, **dadurch gekennzeichnet, dass** mindestens ein vor dem Anfahren oder zu Beginn eines Anfahrens einer Verringerung unterliegender Betriebsparameter wiederholt erfasst und mit einem vorab festgelegten unteren Grenzwert verglichen wird, dessen Unterschreitung als ein bevorstehendes Anfahren des Kraftfahrzeugs interpretierbar ist, und dass die Trennkupplung (9) dann schon vor der Überschreitung der Mindestgeschwindigkeit (vₘᵢₙ) oder dem Loslassen des Bremspedals (x_{BP} = 0, p_{Br} = 0) oder der Betätigung des Fahrpedals (x_{FP} > 0) eingerückt wird, wenn der Betriebsparameter den unteren Grenzwert unterschreitet.

3. Verfahren nach Anspruch 1 oder 2, **dadurch gekennzeichnet, dass** als maßgeblicher Betriebsparameter der Betätigungsgrad der Betriebsbremse wiederholt erfasst und zur Steuerung der Trennkupplung (9) verwendet wird.

4. Verfahren nach Anspruch 3, **dadurch gekennzeichnet, dass** als maßgeblicher Betriebsparameter der Stellweg des Bremspedals (x_{BP}) wiederholt sensorisch erfasst und zur Steuerung der Trennkupplung (9) verwendet wird.

5. Verfahren nach Anspruch 4, **dadurch gekennzeichnet, dass** die Trennkupplung (9) bei einem über einem vorab festgelegten oberen Auslenkungsgrenzwert (x_{Gr/o}) liegenden Stellweg (x_{BP}) des Bremspedals ausgerückt und bei einem unter einem vorab festgelegten unteren Auslenkungsgrenzwert (x_{Gr/u}) liegenden Stellweg (x_{BP}) des Bremspedals eingerückt wird.

6. Verfahren nach Anspruch 3, **dadurch gekennzeichnet, dass** als maßgeblicher Betriebsparameter der mittels des Bremspedals eingestellte Bremsdruck (p_{Br}) wiederholt sensorisch erfasst und zur Steuerung der Trennkupplung (9) verwendet wird.

7. Verfahren nach Anspruch 6, **dadurch gekennzeichnet, dass** die Trennkupplung (9) bei einem über einem vorab festgelegten oberen Bremsdruckgrenzwert (p_{Gr/o}) liegenden Bremsdruck (p_{Br}) ausgerückt und bei einem unter einem vorab festgelegten unteren Bremsdruckgrenzwert (p_{Gr/u}) liegenden Bremsdruck (p_{Br}) eingerückt wird.

## Claims

1. Method for controlling an automated separating clutch (9) which is configured as a friction clutch and is arranged in the drive train of a motor vehicle between the turbine shaft (7) of a hydrodynamic torque converter (3) and the input shaft (10) of a step-by-step variable speed transmission (4) which is provided with positively locking shift elements, and which automated separating clutch (9) is disengaged if a minimum speed is undershot (v_{F} < vₘᵢₙ), the accelerator pedal is not actuated (x_{FP} = 0) and the brake pedal is actuated (x_{BP} > 0, p_{Br} > 0), and is engaged in the case of an engaged start-up gear if the minimum speed is exceeded (v_{F} ≥ vₘᵢₙ) or the accelerator pedal is actuated (x_{FP} > 0) or the brake pedal is not actuated (x_{BP} = 0, p_{Br} = 0), **characterized in that** at least one operating parameter which is subjected to an increase before stopping or at the beginning of a stopping operation is detected repeatedly and is compared with an upper limiting value which is fixed in advance and the exceeding of which can be interpreted as imminent stopping of the motor vehicle, and **in that**, if the accelerator pedal is not actuated (x_{FP} = 0) and the brake pedal is actuated (x_{BP} > 0, p_{Br} > 0), the separating clutch (9) is already disengaged before the undershooting of the minimum speed (vₘᵢₙ) when the operating parameter exceeds the upper limiting value.

2. Method for controlling an automated separating clutch (9) which is configured as a friction clutch and is arranged in the drive train of a motor vehicle between the turbine shaft (7) of a hydrodynamic torque converter (3) and the input shaft (10) of a step-by-step variable speed transmission (4) which is provided with positively locking shift elements, and which automated separating clutch (9) is disengaged if a minimum speed is undershot (v_{F} < vₘᵢₙ), the accelerator pedal is not actuated (x_{FP} = 0) and the brake pedal is actuated (x_{BP} > 0, par > 0), and is engaged in the case of an engaged start-up gear if the minimum speed is exceeded (v_{F} ≥ vₘᵢₙ) or the accelerator pedal is actuated (x_{FP} > 0) or the brake pedal is not actuated (x_{BP} = 0, p_{Br} = 0), **characterized in that** at least one operating parameter which is subjected to a reduction before driving off or at the beginning of a driving-off operation is detected repeatedly and is compared with a lower limiting value which is fixed in advance and the undershooting of which can be interpreted as imminent driving off of the motor vehicle, and **in that** the separating clutch (9) is already engaged before the exceeding of the minimum speed (vₘᵢₙ) or the release of the brake pedal (x_{BP} = 0, p_{Br} = 0) or the actuation of the accelerator pedal (x_{FP} > 0) when the operating parameter undershoots the lower limiting value.

3. Method according to Claim 1 or 2, **characterized in that** the degree of actuation of the service brake is detected repeatedly as decisive operating parameter and is used to control the separating clutch (9).

4. Method according to Claim 3, **characterized in that** the actuating travel of the brake pedal (x_{BP}) is detected repeatedly by sensor as decisive operating parameter and is used to control the separating clutch (9).

5. Method according to Claim 4, **characterized in that**, in the case of an actuating travel (x_{BP}) of the brake pedal which lies above an upper deflection limiting value (x_{Gr/o}) which is fixed in advance, the separating clutch (9) is disengaged and, in the case of an actuating travel (x_{BP}) of the brake pedal which lies below a lower deflection limiting value (x_{Gr/u}) which is fixed in advance, the said separating clutch (9) is engaged.

6. Method according to Claim 3, **characterized in that** the brake pressure (p_{Br}) which is set by means of the brake pedal is detected repeatedly by sensor as decisive operating parameter and is used to control the separating clutch (9).

7. Method according to Claim 6, **characterized in that**, in the case of a brake pressure (p_{Br}) which lies above an upper brake-pressure limiting value (p_{Gr/o}) which is fixed in advance, the separating clutch (9) is disengaged and, in the case of a brake pressure (p_{Br}) which lies below a lower brake-pressure limiting value (p_{Gr/u}) which is fixed in advance, the said separating clutch (9) is engaged.

## Revendications

1. Procédé pour commander un accouplement de séparation (9) automatisé, lequel est réalisé sous la forme d'un accouplement à friction et est disposé dans la chaîne motrice d'un véhicule automobile entre l'arbre de turbine (7) d'un convertisseur de couple hydrodynamique (3) et l'arbre d'entrée (10) d'une boîte de vitesses étagée (4) munie d'éléments de changement de rapport à engagement géométrique, et qui est débrayé en cas de franchissement vers le bas d'une vitesse minimale (v_{F} < vₘᵢₙ) sans que la pédale d'accélération ne soit actionnée (x_{FP} = 0) et avec la pédale de frein actionnée (x_{BP} > 0, p_{Br} > 0), et qui est embrayé lorsque le rapport de démarrage est engagé en cas de dépassement de la vitesse minimale (v_{F} ≥ vₘᵢₙ) ou lorsque la pédale d'accélération est actionnée (x_{FP} > 0) ou lorsque la pédale de frein n'est pas actionnée (x_{BP} = 0, p_{Br} = 0), **caractérisé en ce qu'** au moins un paramètre de fonctionnement sous-jacent à une augmentation est détecté de manière répétée avant un arrêt ou au début d'un arrêt et comparé avec une valeur limite supérieure préalablement fixée dont le dépassement peut être interprété comme un arrêt imminent du véhicule automobile, et **en ce que** l'accouplement de séparation (9), lorsque la pédale d'accélération n'est pas actionnée (x_{FP} = 0) et avec la pédale de frein actionnée (x_{BP} > 0, p_{Br} > 0), est déjà débrayé avant le franchissement vers le bas de la vitesse minimale (vₘᵢₙ) lorsque le paramètre de fonctionnement dépasse la valeur limite supérieure.

2. Procédé pour commander un accouplement de séparation (9) automatisé, lequel est réalisé sous la forme d'un accouplement à friction et est disposé dans la chaîne motrice d'un véhicule automobile entre l'arbre de turbine (7) d'un convertisseur de couple hydrodynamique (3) et l'arbre d'entrée (10) d'une boîte de vitesses étagée (4) munie d'éléments de changement de rapport à engagement géométrique, et qui est débrayé en cas de franchissement vers le bas d'une vitesse minimale (v_{F} < vₘᵢₙ) sans que la pédale d'accélération ne soit actionnée (x_{FP} = 0) et avec la pédale de frein actionnée (x_{BP} > 0, p_{Br} > 0), et qui est embrayé lorsque le rapport de démarrage est engagé en cas de dépassement de la vitesse minimale (v_{F} ≥ vₘᵢₙ) ou lorsque la pédale d'accélération est actionnée (x_{FP} > 0) ou lorsque la pédale de frein n'est pas actionnée (x_{BP} = 0, p_{Br} = 0), **caractérisé en ce qu'** au moins un paramètre de fonctionnement sous-jacent à une diminution est détecté de manière répétitive avant le démarrage ou au début d'un démarrage et comparé avec une valeur limite inférieure préalablement fixée dont le franchissement vers le bas peut être interprété comme un démarrage imminent du véhicule, et **en ce que** l'accouplement de séparation (9) est déjà embrayé avant le dépassement de la vitesse minimale (vₘᵢₙ) ou le relâchement de la pédale de frein (x_{BP} = 0, p_{Br} = 0) ou l'actionnement de la pédale d' accélération (x_{FP} > 0) lorsque le paramètre de fonctionnement devient inférieur à la valeur limite inférieure.

3. Procédé selon la revendication 1 ou 2, **caractérisé en ce que** le paramètre de fonctionnement le plus déterminant est le degré d'actionnement du frein de service qui est détecté de manière répétée et utilisé pour commander l'accouplement de séparation (9).

4. Procédé selon la revendication 3, **caractérisé en ce que** le paramètre de fonctionnement le plus déterminant est la course de commande de la pédale de frein (x_{BP}) qui est détectée de manière répétée par des capteurs et utilisée pour commander l'accouplement de séparation (9).

5. Procédé selon la revendication 4, **caractérisé en ce que** l'accouplement de séparation (9) est débrayé en présence d'une course de commande (x_{BP}) de la pédale de frein qui est supérieure à une valeur limite d'excursion supérieure (x_{Gr/o}) préalablement fixée et embrayé en présence d'une course de commande (x_{BP}) de la pédale de frein qui est inférieure à une valeur limite d'excursion inférieure (x_{Gr/u}) préalablement fixée.

6. Procédé selon la revendication 3, **caractérisé en ce que** le paramètre de fonctionnement le plus déterminant est la pression de freinage réglée au moyen de la pédale de frein (p_{Br}) qui est détectée de manière répétée par des capteurs et utilisée pour commander l'accouplement de séparation (9).

7. Procédé selon la revendication 6, **caractérisé en ce que** l'accouplement de séparation (9) est débrayé en présence d'une pression de freinage (p_{Br}) qui est supérieure à une valeur limite de pression de freinage supérieure (p_{Gr/o}) préalablement fixée et embrayé en présence d'une pression de freinage (p_{Br}) qui est inférieure à une valeur limite de pression de freinage inférieure (p_{Gr/u}) préalablement fixée.
